# EUROPEAN PATENT APPLICATION

(11) **EP 1 972 725 A2**
(43) Date of publication of application: **24.09.2008**
(21) Application number: 07113875.4
(22) Date of filing: 06.08.2007
(51) Int. Cl.: E02F 9/12, E02F 9/20, F16H 61/00

(54) **Integrated transmission system of an excavator**

(30) Priority: 20.03.2007 IT MI20070549
(71) Applicant: Bertoni, Giovanni, 44100 Ferrara (IT)
(72) Inventor: Bertoni, Giovanni, 44100 Ferrara (IT)
(74) Representative: De Gregori, Antonella

(57) **Abstract**

An integrated mechanical transmission system of an excavator (91), equipped with a diesel engine (140), and comprising an undercarriage (110) carrying a mounted rotary table (104) carrying a tower (95), comprises:
- an electric generator (142) coupled with the diesel engine (140);
- a first linear electric motor (100) for commanding the rotation of the rotary table (104);
- at least a second high torque reversible electric motor (121) with innovative technology for commanding the translation of the vehicle;
- at least one voltage and current intensity regulating group (144) connected to the electric generator (142);
- a rotary distributor with contacts (147) provided on the rotary table (104) and electrically connected to the first linear motor (100) and to the second high torque reversible motor (121) with innovative technology;
- a battery group (145) connected to the regulation group (144).

## Description

The present invention refers to an integrated transmission system of an excavator.

In particular the invention refers to an integrated mechanical transmission system intended for the propulsion and rotation of the rotary table of a wheeled or crawler excavator.

The technology for building earth-moving machines such as crawler and wheeled excavators is well-established.

Such machines are indeed produced by the largest manufacturers of the field through substantially similar technologies that have been established for some time.

The various classes or categories of machines are compared by comparing vehicles of equivalent weight (for example 20 ton, 24 ton, 30 ton classes, etc.) and they differ from one another in:
- dimensional characteristics: pitch, track, digging diagram, size and type of arms, just to name a few;
- performance characteristics: digging force, traction force, table rotation torque and speed, translation speed, and similar;
- driving characteristics: operator comfort, noisiness, ergonomics and sensitivity of the commands, electronically assisted work programmes, etc.;
- constructive characteristics: quality of the construction techniques of all of the mechanical, hydraulic and electronic structural members.

The aforementioned machines are generally characterised by the same constructive configuration in which there is:
- a bottom frame made through a welded structure, the frame is very rigid and houses at the two rear ends the overall drive wheel reducers that ensure the mobility of the vehicle through a system of two side crawlers for the crawler excavator or the four hubs for the wheeled machine.
- a rotary top part (swivel tower or rotary table) connected to the bottom frame by means of an axial ball bearing known as "fifth wheel". The tower has the power drive unit (diesel engine with all of the necessary accessories for its operation) and the hydraulic system suitable for actuating the various work and displacement functions of the excavator installed inside it. The hydraulic system is essentially and generally made up of 2 hydraulic pumps actuated by the diesel engine, of blocks of directional valves connected with the various operating functions (excavating cylinders, rotation, translation). The commanding of all of the functions is carried out through "control sticks" with hydraulic and electrohydraulic interlocking systems (with assisted electronic programming when required.
- an excavating system consisting of the mobile arms, of the scoop or bucket, commanded by the hydraulic cylinders connected through pipes to the respective directional valves mentioned above.

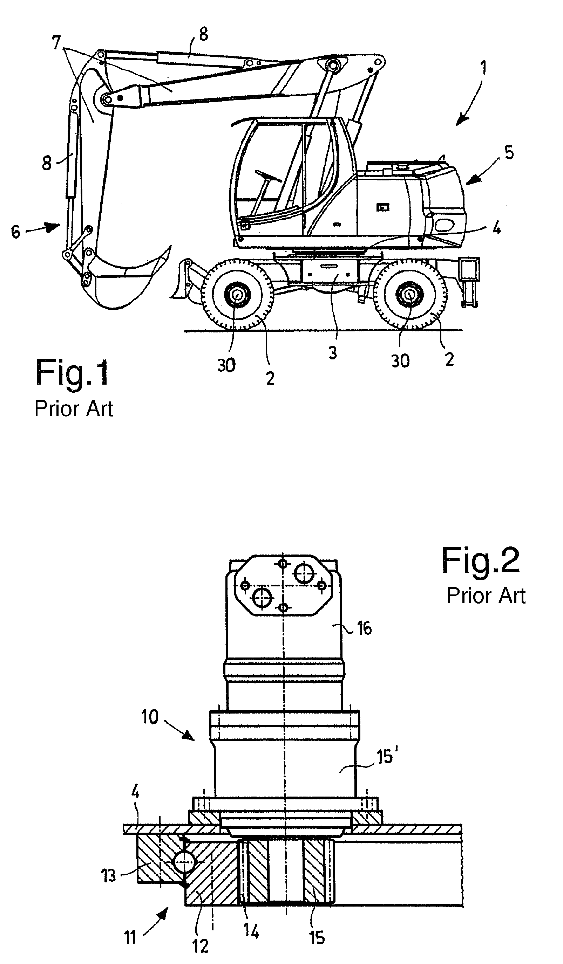

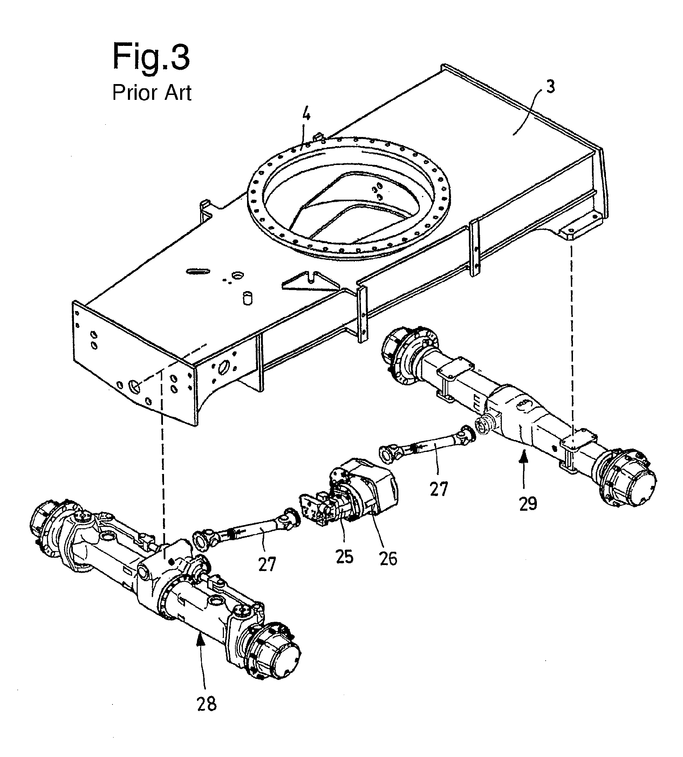

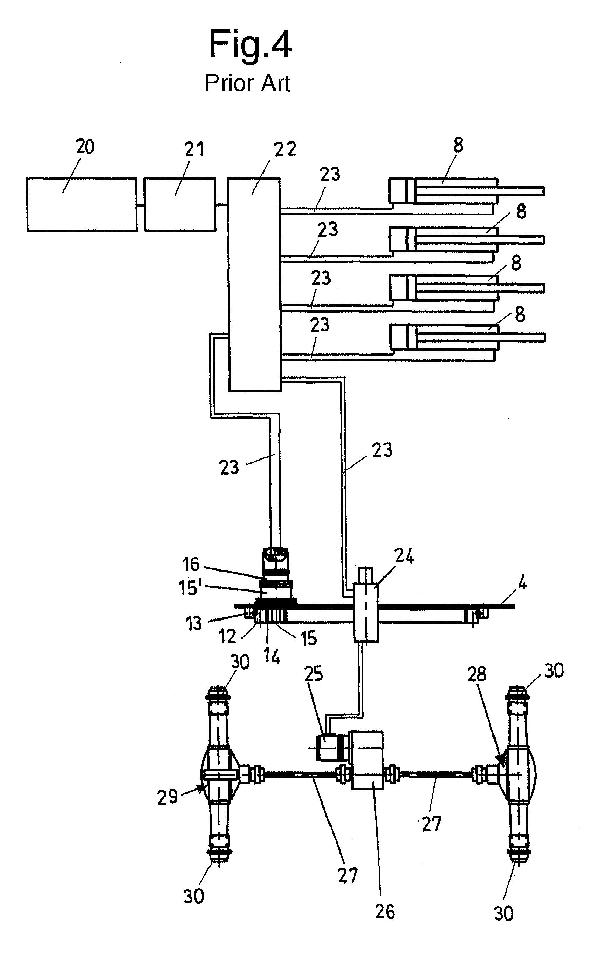

With particular reference to the rotation of the tower and to the translation of the vehicle, the prior art according to the most commonly adopted method, is hereafter described and schematically illustrated in figures 1-4.

Figures 1-4 of the prior art refer as an example to a wheeled excavator, but the main component elements are also present in the crawler means.

Figure 1 schematically illustrates an excavator 1 according to the prior art equipped with rubber tyres 2 mounted on hubs 30 and comprising an undercarriage 3 on which a rotary table 4 is mounted carrying a tower 5 and a bucket 6 with the relative arms 7 actuated through hydraulic cylinders 8.

Figure 2 illustrates a partial section view of a detail of the system 10 for rotating the rotary tower or rotary table connected to the bottom frame (not illustrated) by means of an axial ball bearing known as "fifth wheel" 11. In the version illustrated in figure 2 the fifth wheel 11 has an inner element 12 fixed to the undercarriage and an outer element 13 integral with the rotary table.

Along the inner circumference of the inner element 12 of the fifth wheel 11 an axial toothing 14 is made arranged for engagement with a corresponding pinion 15 connected to a epicyclic reducer 15', generally with two stages, connected coaxially to a hydraulic motor 16 fixed to the rotary table that is commanded by the respective directional valve connected to it. The power drive unit (diesel engine with all of the necessary accessories for its operation) and the hydraulic system suitable for actuating the various work and displacement functions of the excavator are installed in the tower.

Figure 3 illustrates an exploded perspective view of an undercarriage 3 (wheeled excavator) with the relative front axle 28, rear axle 29, the transmissions 27 with double universal joint, the hydraulic motor 25 for the translation of the vehicle and the mechanical gearshift 26 connected to it.

Figure 4 illustrates a diagram of the motorisation/transmission system of a vehicle according to the prior art, comprising a diesel engine 20 connected to one or more hydraulic pumps 21 connected in turn to a distribution group 22 including regulating and control valves.

Such a group 22 is operatively connected through suitable hydraulic circuits 23 to the hydraulic cylinders 8, to the hydraulic rotation motor 16 that actuates the reducer 15' with pinions 15 (already illustrated in figure 2) in turn supported by the rotary table 4 for engagement with the fifth wheel 11.

Another hydraulic connection 23 from the distribution group 22 feeds a hydraulic manifold 24 arranged between rotary table 4 and undercarriage (not illustrated for the sake of simplicity) to in turn feed the hydraulic translation motor 25 connected to the mechanical gearshift 26.

The tower 5 and with it all of the digging part moves with respect to the bottom truck to appropriately direct the bucket discharge 6 where decided by the operator.

Such a movement is carried out through the engagement of the fifth wheel or axial ball bearing and achieved through the mechanical coupling with pinion gears/toothing inside the fifth wheel.

The toothing 14 inside the fifth wheel is an integral part of the bearing and is made with teeth having a large modulus.

The pinion 15 is connected coaxially to the epicyclic reducer (generally two stage) commanded by the hydraulic motor 16 with high pressure axial pistons flanged on the reducer 15'. The connection of the hydraulic motor to the respective directional valve through hydraulic pipes with the interposition of anti-cavitation and anti-shock valves allows the rotation movement of the tower to be obtained in the two directions.

As regards the translation or propulsion of the vehicle in the case of a crawler excavator, the frame or bottom truck and with it all of the machine can move by means of two hydraulic motors with axial pistons each flanged on the respective epicyclic reducer (generally three stage).

The motor rim that engages directly with the respective crawler is flanged on the reducer. Each track can be commanded separately from the other. The flow of oil comes from the top part of the tower of the respective directional valve, crosses a four-way rotary joint and separately feeds the two hydraulic motors that are protected by safety valves (anti-cavitation and anti-shock).

From what has been described it is possible to say that in excavators the constructive technique of totally exploiting the hydraulic transmission solution for the rotation and translation functions, according to the aforementioned schematised methods, as well as for the digging functions, is well-established.

The diesel motor supplies mechanical rotation energy to the hydraulic pumps, these supply hydraulic energy to the unit of the directional valves in the form of flow rate and pressure that is conveyed to the users; in the case of the hydraulic rotation and translation motor this hydraulic energy transforms back into mechanical rotation energy, i.e. overall into movement of the table (in the two directions) and/or into movement of the drive wheel of the respective tracks and therefore translation in the two directions of travel.

Both of the described functions, rotation and translation, are integrated by the relative hydraulic and electronic command and control systems located in the cabin and, as already stated, by suitable safety protection valves in the relative hydraulic circuits.

All of the hydraulic system finally leads to an oil tank from where the pumps are fed and where the various lines return after the use of the required functions. All of the oil of the system is finally cooled down through a radiant mass exchanger cooled by the fan of the diesel motor.

The presence of the aforementioned hydraulic elements for the rotation and translation of the vehicle brings a series of drawbacks including:
- complexity of construction: the presence of expensive hydraulic and mechanical apparatuses (directional valves, rotary joints, hydraulic motors, epicyclic reducers, rigid and flexible pipes for high pressures, hydraulic valves and fittings, means a substantial manufacturing cost.
- energy cost: the current hydraulic transmissions (rotation and translation) made with pumps and motors with axial pistons can, in optimal conditions of medium pressure (250-280 bars), a total yield of no more than 75-80%, moreover the mechanical transmissions (three-stage epicyclic reducer and the elimination of the pinion/fifth wheel toothing engagement) further reduce the efficiency of the energy transformation, the cooling of the oil means a further use of energy at the expense of the overall yield.
- noise pollution: despite the significant technological progress of recent years, hydraulic transmissions produce a characteristic sound that is very loud.
- maintenance costs: the hydraulic circuits and the connected apparatuses require substantially continuous maintenance, checking of the hydraulic circuit, setting (valve calibration) are all the more expensive due to the apparatuses and specialised personnel necessary.
- drivability of the vehicle: despite the electronic controls the hydraulic movement still has drawbacks relative to the precision, response, modulability and gradualness of the rotations and translations with a negative impact on the drivability of the vehicle.

The Applicant has faced the problem to improve the efficiency of the transmission of an excavator.

The Applicant has been able to solve the aforementioned problem by providing an integrated transmission system of an excavator in which the hydraulic system for commanding and controlling the table rotation and the vehicle translation is replaced by an electrical energy system based upon the following main components:
- Current generator coupled with the diesel motor;
- Linear electric motor for commanding the rotation of the table;
- High torque reversible axial electric motor for commanding the translation;
- Voltage and current intensity regulating group;
- Rotary distributor with contacts;
- Battery group.

According to a first aspect of the invention an integrated transmission system of an excavator according to what is outlined in claim 1 is therefore provided.

Further characteristics of the invention form the object of the dependent claims.

The characteristics and advantages of the integrated transmission system of an excavator according to the present invention shall become clearer from the following description, given as a non-limiting example, referring to the attached schematic drawings, in which:
figures 1-4 respectively illustrate a wheeled excavator according to the prior art, two details and a scheme of the elements thereof;

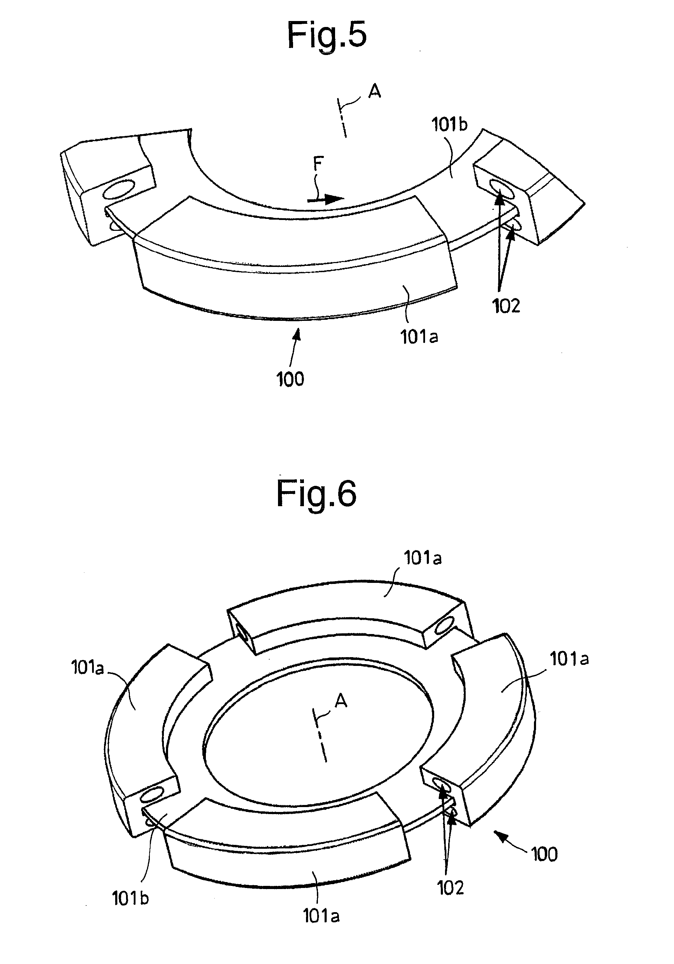

figures 5 and 6 schematically illustrate perspective views of a detail of the linear motor used in the rotation system according to the present invention;

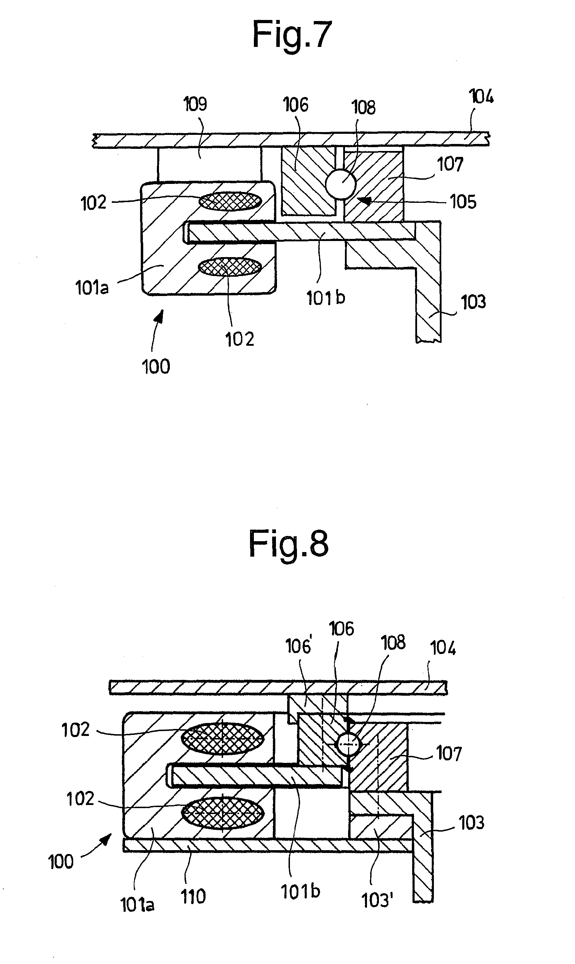

figures 7 and 8 illustrate schematic partial section view of as many embodiments of the transmission system according to the invention applied to the rotary table of an excavator;

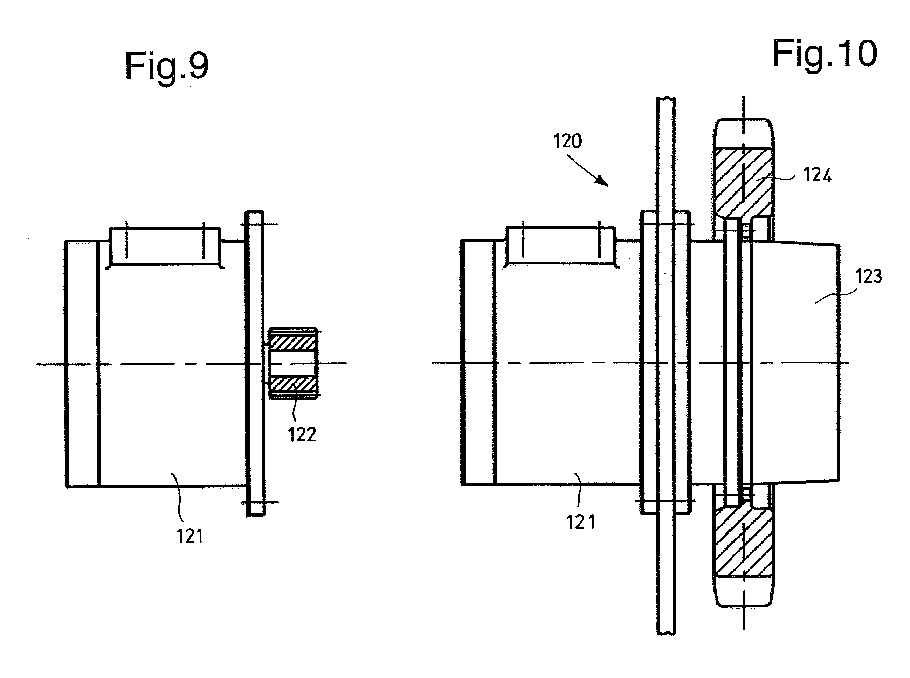

figures 9 and 10 illustrate partially sectioned front views of the transmission system according to the invention applied to the translation of a crawler excavator;

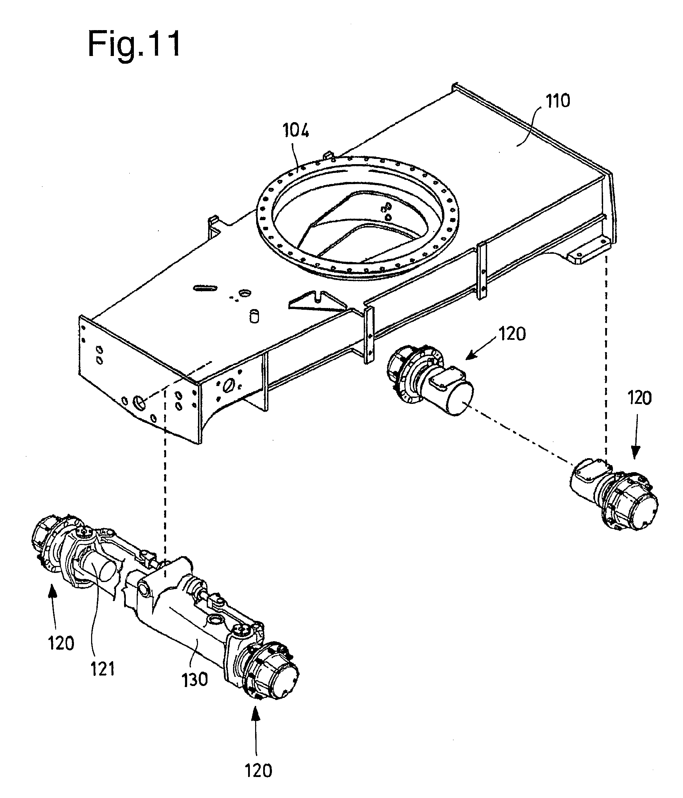

figure 11 is an exploded perspective view of an undercarriage of a wheeled excavator according to the present invention;

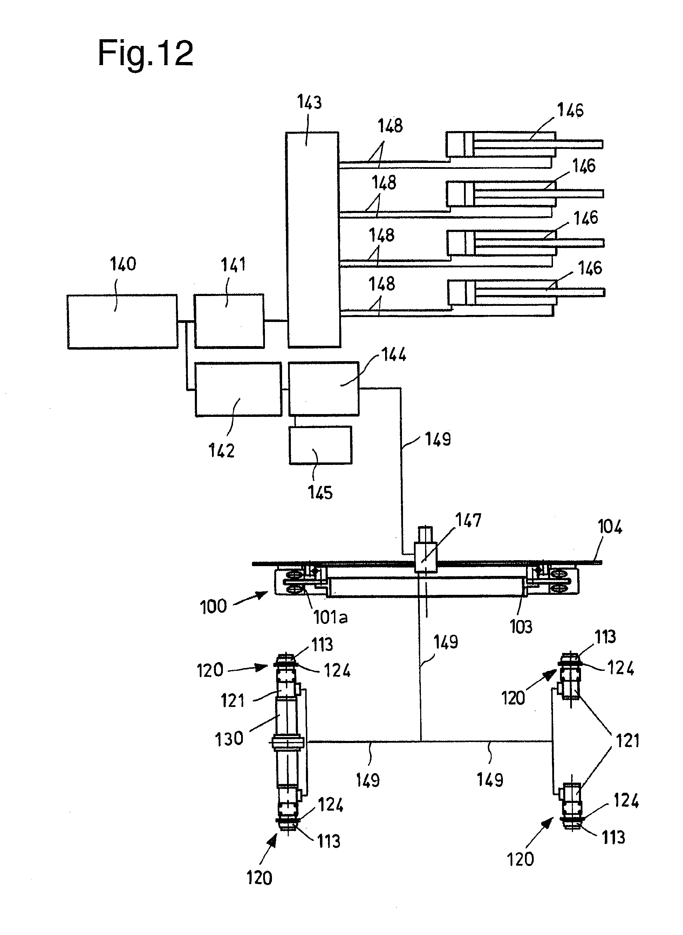

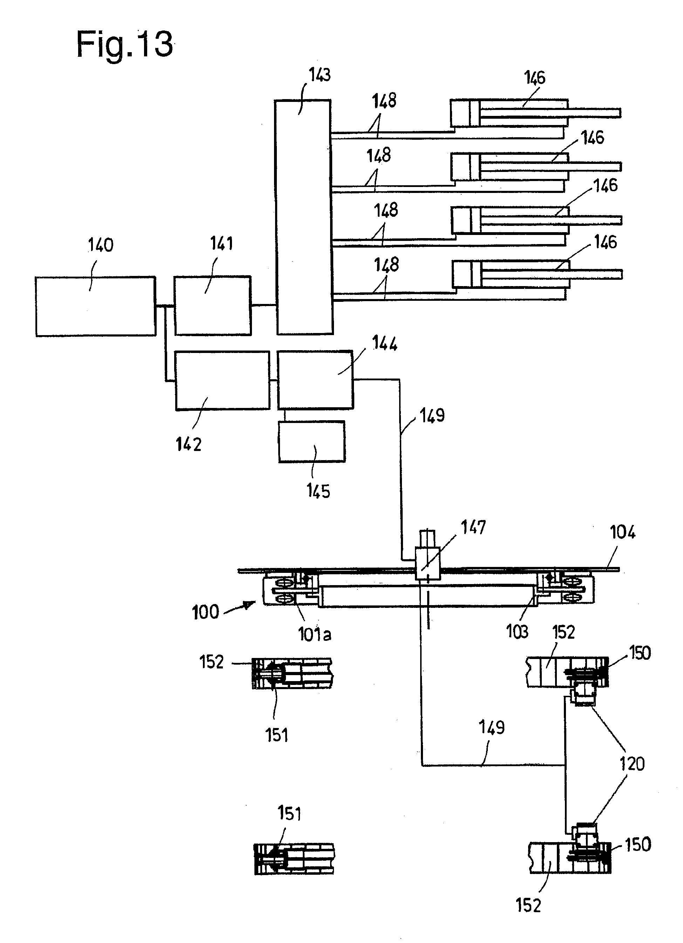

figures 12 and 13 respectively schematically illustrate one of the elements of a wheeled excavator and of a crawler excavator equipped with the integrated transmission system according to the present invention;

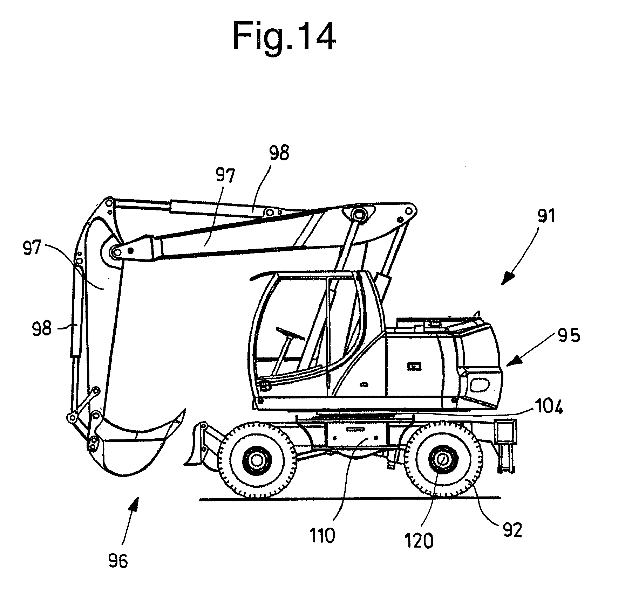

figure 14 illustrates a schematic side view of a wheeled excavator equipped with the integrated transmission system according to the invention.

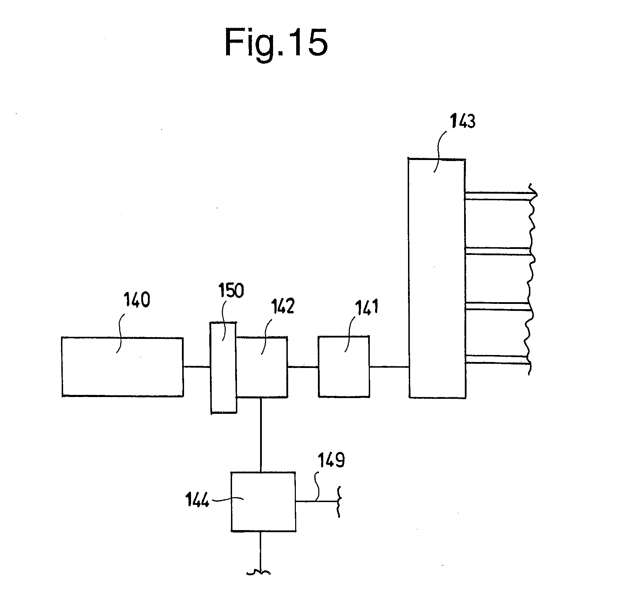

figure 15 illustrates a partial diagram of an excavator equipped with the integrated transmission system according to a variant embodiment of the invention.

With reference to figures 5 to 15, an integrated transmission system of a wheeled or crawler excavator is schematically illustrated.

With particular reference to figure 14 a wheeled excavator 91 is illustrated that, purely as an example, has exterior elements in common with the excavators according to the prior art (according to figure 1), and that are therefore shown for the sake of easy understanding.

The excavator 91 carrying the integrated transmission system according to the present invention is equipped with diesel engine 140, and comprises an undercarriage 110 equipped with tyred wheels 92 mounted on hubs 120. The undercarriage 110 has a rotary table 104 mounted on it carrying a tower 95 and a bucket 96 with the relative arms 97 actuated through hydraulic cylinders 98.

The integrated transmission system of the excavator 91 comprises:
- an electrical generator 142 coupled with the diesel engine 140;
- a first linear electric motor 100 for commanding the rotation of the rotary table 104;
- at least a second high-torque reversible electric motor 121 for commanding translation;
- at least one voltage and current intensity regulating group 144 connected to the electric generator 142;
- a rotary distributor with contacts 147 provided on said rotary table 104 and electrically connected to said first linear motor 100 and to said second high-torque reversible motor 121;
- a battery group 145 connected to the regulating group 144.

The digging functions of the arm 97 and bucket 96 part are managed through a hydraulic system, and consequently the power supply of the various hydraulic cylinders 98 takes place by means of an independent hydraulic circuit comprising a hydraulic pump 141 in turn connected to a distribution group 143 including regulation and control valves and hydraulic pipes 148.

Whereas the linear motor 100 for commanding rotation is made according to the variants represented in figures 5-8, the electric motors 121 (illustrated in the scheme of figure 9), intended for translation both for the wheeled vehicle and for the crawler vehicle, are reversible axial motors equipped with a rotor and a stator capable of supplying high torque thanks to the innovative technology applied.

The linear motor 100 intended for the rotation of the table that can be made according to the aforementioned variants can comprise a plurality of motor elements 101a arranged around the surface of an annular disc 101b subjecting said disc to a tangential force F when current is passed between motor element and disc.

Such a force F generates a torque that places the motor elements in relative rotation with respect to the annular disc, about a central axis A, perpendicular to the plane of the disc itself.

According to the configuration, the motor elements and vice-versa the annular disc can therefore be stators or rotors.

In figure 6 four motor elements are depicted but according to the tangential force identified by the arrow F to be imparted, the necessary torque and the size of the system, there can be two or more motor elements 101a.

Such motor elements 101a are preferably made with C-shaped section in the wings of which a portion of the annular disc 101b is positioned.

The magnetic field induced between the poles 102 of the motor element 101a, from the passage of current between motor element and disc generates the tangential force F due to which the torque is transmitted.

The first linear motor 100 can therefore generate a movement with great modulability, gradualness, and response in the performance range (for example 0-12 table revolutions. In particular, with the adoption of the aforementioned motor the following advantages are obtained:
- pickup starting with high deliverable torque;
- gradual acceleration;
- gradual deceleration;
- very precise braking and positioning of the bucket;
- quietness of movement.

Moreover, the constructive simplification of the integrated transmission system allows the motorisation system to be simplified thanks to the elimination of the following hydraulic and mechanical components already described for the excavator according to the prior art:
- Elimination of the toothing of the fifth wheel;
- Elimination of pinion (three-stage reducer) and hydraulic motor;
- Elimination of the directional valve and protection valves;
- Elimination of pinion/fifth wheel lubrication grease tank.

With reference to figure 7, in the first motor 100 the motor element 101a acts as a rotor and is fixed through support 109 to the rotary table 104 rotating with it.

A fifth wheel 105 in the form of a rolling axial bearing has an outer element 106 integral with the rotary table, an inner element 107 fixed to the annular disc 101b and a plurality of balls 108 that ensure the mutual rotation of said elements of the fifth wheel. The annular disc is in turn supported by the undercarriage through a support 103 circumferentially fixed to the inner edge of the disc.

According to a variant embodiment illustrated in figure 8, the motor element 101a acts as a stator and is fixed to the undercarriage 110.

The fifth wheel 105 in the form of a rolling axial bearing has an outer element 106 fixed at the top to the rotary table through the interposition of a spacer 106' and at the bottom to the inner edge portion of the annular disc 101b integral with the rotary table. The inner element 107 is fixed to the undercarriage 110 through a support 103 circumferentially fixed to the inner edge of the disc with prior interposition of a spacer 103'.

Both the first and second motor 100, 121 are integrated by respective braking systems (not illustrated), in particular hydraulic pincer disc brakes for the second motor or negative command electromagnetic brakes (at the zeroing of the voltage they lock) that can be validly used for both.

With reference to the vehicle translation system, figures 9 and 10 represent the second electric motor 121 of the reversible rotary axial type equipped with a pinion 122 that is coupled in block directly with the drive wheel or with a single-stage epicyclic reducer 124 for making a hub unit 120 carrying the hub 123 suitable for supporting each tyred wheel or each of the two drive wheels of the crawler or furthermore suitable for supplying the rotation movement to be transmitted to the wheels through suitable transmissions.

Figure 11 illustrates the undercarriage 110 equipped with a front axle 130 and with two rear hub units 120 directly flanged on the undercarriage.

Figures 12 and 13 illustrate, in the form of a block diagram integrated with a functional diagram, the respective elements of a wheeled excavator and of a crawler excavator carrying the integrated transmission system according to the invention.

Both of the figures illustrate the electrical generator 142 coupled with the diesel engine 140, the linear electric motor 100 for the rotation command of the rotary table 104, the independent hydraulic circuit comprising a hydraulic pump 141 in turn connected to a distribution group 143 including regulation and control valves that circulate the oil in the hydraulic cylinders 146 through ducts 148 to move the bucket and the arms.

Connected through an electric line 149 to the electrical generator 142 there is the voltage and current intensity regulation group 144 and a rotary distributor with contacts 147 provided on said rotary table 104, the battery group 145 is connected to a regulation group 144.

Both of the figures illustrate the rotation mechanism of the rotary table already described.

The rotary distributor with contacts 147 through an electric line 149 supplies power, in the case of a wheeled excavator, the front axle 130 equipped with two hub units 120 each comprising a second reversible electric motor 121 and two hub units 120 fixed at the back to the undercarriage.

In the case of a crawler excavator illustrated in figure 13, the rotary distributor with contacts 147 directly feeds power to two second hub units 120 arranged at the back so as to determine the traction of each crawler.

Of course, it is possible to make propulsions configured differently through universal joint transmissions reducing the necessary motors from four to two or to a single second motor 121.

In a variant embodiment illustrated in a partial diagram in figure 15, a slightly modified equipping is foreseen with respect to that of figures 12 and 13, wherein a decoupling mechanism 150 is arranged between the motor 140 and the generator 142 and connected to both, and the generator 142 is in turn coaxially connected to the pump 141.

The decoupling mechanism 150 can be made in a free wheel or friction form or the like so to permit decoupling the movement between the motor 140 and the generator 142 when the charge level of the batteries 145 is above a predefinable threshold level.

In such event, a preferably automatic system turns off the motor 140 and the generator 142 supplied by the batteries 145 provides the power necessary for the functioning of the pump 141, achieving maximum energy savings.

In any configuration the second high-torque reversible motor 121 with innovative technology, thanks to its characteristics, ensures:
- great modulability and gradualness of command with high pickup torque;
- regularity of rotation both in acceleration and in deceleration, in forward drive and in reverse;
- absence of vibrations during operations;
- total motor revolution control when the machine goes downhill.

The constructive simplification allows the following conventional components to be eliminated or reduced:
a) translation reducer (at least partially)
b) hydraulic motor with axial pistons and relative pipes;
c) directional valve of the hydraulic motor with anti-cavitation and anti-shock valves;
d) rotary joint relative to the hydraulic motor;
e) constructive simplification.

The integrated system according to the present invention allows the following purposes to be achieved:
Elimination of expensive hydraulic and mechanical apparatuses (directional valves, rotary joint, epicyclic reducers, rigid and flexible pipes for high pressures, hydraulic valves and fittings.
Energy saving thanks to an increase in yield: the current hydraulic transmissions (rotation and translation) made with pumps and motors having axial pistons can, in optimal conditions of medium pressure (250-280 bars), a total yield of no more than 75-80%; vice-versa, the yield of a generator/linear motor electrical transmission exceeds 90%. Moreover, energy recovery can be obtained in the rotation braking step for which reason the motor acts like a generator. In the same way, in the downhill translation step or in the slowing down step the motors give up energy to the generator, Such energy can also be accumulated in the batteries 145.
In the case of the rotation, the elimination of the three-stage epicyclic reducer and the elimination of the fifth wheel toothing/pinion engagement leads to an improvement in efficiency equal to:
   *n* = engagement yield of 1-stage reducer = 0.96
   *nₜ* = engagement yield of 3-stage reducer = 0.96³ = 0.88
   total *nₜ* = epicyclic reducer = 0.88
   fifth wheel/pinion engagement yield = 0.9
   total reducer and fifth wheel pinion yield = 0.9*0.88 = 0.8

Therefore, with a linear motor it is possible to gain 20% due to the absence of engaged mechanical members and at least 10-15% as already stated due to the passage from the hydraulic transmission to the electrical transmission for a total gain of 30-35%.

In the case of the translation of the crawler vehicle eliminating at least two reduction stages gives:
nₜ = 0.96² = 0.92
equal to 8% gain added to the 10-15% due to the torque motor transmission, obtaining a total gain of 18-23% for each crawler (in the case of a crawler excavator).

In the case of a wheeled excavator, since the four torque motors are inserted into the axles with a single reduction stage between motor and wheels there are the following simplifications with respect to the conventional known solutions:
a) elimination of a reduction jump in the reducer of the axle (notoriously two-stage);
b) elimination of a reduction jump in the reducer in block with the axle (on which the hydraulic motor is flanged);
c) elimination of the conical torque reduction in the axles (two conical torques);
d) elimination of two articulations and relative friction.

Quantifying the yields gives:
a1= yield for epicyclic reducer = 0.96
b1= yield for reducer jump = 0.98
c1= yield for two conical torques = 0.94² = 0.88
d1= yield for two universal joints = 0.98² = 0.96

Overall, the total yield equal to the product of the aforementioned yields nₜₒₜₐₗ = 0.79, therefore the greater simplification of the transmission results in a gain that exceeds 80% that must be added to with the 10-15% of the greater efficiency of the electrical system for an overall advantage equal to 30-35%.

Other advantages are the lesser noise and the lower maintenance necessary.

Relative to this last advantage it should be noted that the electric motors and the generator due to their characteristics have very little need for periodic maintenance and a much longer operating lifetime than hydraulic components. The control of the hydraulic circuit (valve calibration) is also very expensive due to the need for specialised personnel and apparatuses.

Moreover, an overall reduction of the production costs is obtained both due to the overall cost and to the machine assembly simplifications.

Easier drivability since the characteristics already highlighted of linear and axial motors allow their movement to be controlled more precisely, with better response, modulability and gradualness.

It should also be highlighted that the hydraulic transmissions in the case of machine failure due to multiple causes (for example dependent upon the diesel engine, the hydraulic pumps, the hydraulic motors, the directional valves, the command system, breaking of the pipes and others) do not allow the vehicle to either be towed or moved since the respective translation motors are locked by the incompressibility of the fluid in the pipes.

This drawback can represent a problem that is difficult to solve quickly.

On the other hand, since the electric motor is free to rotate without any tension, it is also possible to tow the vehicle with ease.

Therefore, a vehicle already set up to receive a drawbar can be made that, being practically "idle", can be towed by a haulage vehicle in front of it.

## Claims

1. Integrated transmission system of a wheeled or crawler excavator (91), equipped with a diesel engine (140), and comprises an undercarriage (110) carrying a mounted rotary table (104) carrying a tower (95), the integrated transmission system being **characterised in that** it comprises:
- an electric generator (142) coupled with the diesel engine (140);
- a first linear electric motor (100) for commanding the rotation of the rotary table (104);
- at least a second high torque reversible electric motor (121) for commanding the translation of the vehicle;
- at least one voltage and current intensity regulating group (144) connected to the electric generator (142);
- a rotary distributor with contacts (147) provided on said rotary table (104) and electrically connected to the first linear electric motor (100) and to the second high torque reversible electric motor (121);
- a battery group (145) connected to the regulation group (144).

2. Integrated transmission system according to claim 1, wherein said first linear motor (100) comprises an annular disc (101b) and a plurality of motor elements (101a) arranged close to at least one surface of the annular disc (101b) arranged so as to subject said annular disc to a tangential force (F) as current is passed between motor element and disc carrying out a relative rotation between motor element and annular disc about a central axis (A), perpendicular to the plane of the disc itself.

3. Integrated transmission system according to claim 1, wherein said motor elements (101a) are made with a C-shaped section in the wings of which a portion of the annular disc (101b) Is positioned.

4. Integrated transmission system according to claim 3, wherein in said first electric motor (100) for the rotation of the rotary table (104), the motor element (101a) is a rotor and is fixed through support (109) to the rotary table (104) rotating with it.

5. Integrated transmission system according to claim 4, wherein a fifth wheel (105) in the form of a rolling axial bearing has an outer element (106) integral with the rotary table (104), an inner element (107) fixed to the annular disc (101b) and a plurality of balls (108) that ensure the mutual rotation of said elements of the fifth wheel, the annular disc (101b) being in turn supported by the undercarriage through a support (103) circumferentially fixed to the inner edge of the disc.

6. Integrated transmission system according to claim 3, wherein the motor element (101a) is a stator and is fixed to the undercarriage (110).

7. Integrated transmission system according to claim 6, wherein a fifth wheel (105) in the form of a rolling axial bearing has an outer element (106) fixed at the top to the rotary table through the interposition of a spacer (106') and at the bottom to the inner edge portion of the annular disc (101b) integral with the rotary table, the inner element (107) is fixed to the undercarriage (110) through a support (103) circumferentially fixed to the inner edge of the disc with prior interposition of a spacer (103').

8. Integrated transmission system according to claim 1, wherein the translation system of the excavator comprises at least one second high-torque reversible electric motor (121) equipped with a pinion (122) that is coupled in block directly to the drive wheel or to a one-stage epicyclic reducer (124) to make a hub unit (120) carrying the hub (123).

9. Integrated transmission system according to claim 1, wherein the translation system of the wheeled excavator comprises the rotary distributor with contacts (147) connected through an electric line (149) supplying power, in the case of a wheeled excavator, to two hub units (120) mounted on a front axle (130), and two hub units (120) fixed at the back to the undercarriage.

10. Integrated transmission system according to claim 1, wherein the translation system of the crawler excavator comprises the rotary distributor with contacts (147) directly supplying power to two hub units (120) arranged at the back so as to determine the traction of each crawler.

11. Integrated transmission system according to claim 1, wherein a decoupling mechanism (150) is arranged between the motor (140) and the generator (142) and is connected to said motor (140) and to the generator (142).

12. Integrated transmission system according to claim 11, wherein said decoupling mechanism (150) can be made in free wheel or friction form or the like, permitting decoupling the movement between the motor (140) and the generator (142) when the charge level of the batteries (145) is above a predefinable threshold level.

13. Integrated transmission system according to claim 1, wherein said generator (142) is coaxially connected to a pump (141).
